# EUROPÄISCHE PATENTSCHRIFT

(11) **EP 1 506 081 B1**
(45) Veröffentlichungstag und Bekanntmachung des Hinweises auf die Patenterteilung: **02.01.2008**
(21) Anmeldenummer: 03727380.2
(22) Anmeldetag: 26.04.2003
(51) Int. Cl.: B29C 47/08, B29C 47/40, F16H 1/22

(54) **ANTRIEBSVORRICHTUNG FÜR EINEN GLEICHSINNIG DREHENDEN MEHRWELLENEXTRUDER**
DRIVE DEVICE FOR A MULTI-SHAFT EXTRUDER ROTATING IN THE SAME DIRECTION
DISPOSITIF D'ENTRAINEMENT POUR EXTRUDEUSE MULTIVIS TOURNANT DANS LE MEME SENS

(30) Priorität: 08.05.2002 DE 10220552
(43) Veröffentlichungstag der Anmeldung: 16.02.2005
(73) Patentinhaber: KrausMaffei Technologies GmbH, 80997 München (DE)
(72) Erfinder: WOHLRAB, Walter, 91781 Weissenburg (DE)
(74) Vertreter: Zollner, Richard
(86) Internationale Anmeldenummer: PCT/EP2003/004388
(87) Internationale Veröffentlichungsnummer: WO 2003/095178

(56) Entgegenhaltungen:
- DE-C- 846 012
- DE-U- 29 805 025
- FR-A- 915 763
- US-A- 4 170 150
- US-A- 4 586 402
- US-A- 5 103 689

## Beschreibung

Die Erfindung betrifft eine Antriebsvorrichtung für einen gleichsinnig drehenden Mehrwellenextruder gemäß dem Oberbegriff des Anspruchs 1.

Ein gleichsinnig drehender Mehrschneckenextruder weißt herkömmlicher Weise einen Antriebsmotor, ein Untersetzungsgetriebe und ein Verteilergetriebe auf, welches die Kraft von dem Antriebsmotor auf die Extruderschnecken überträgt.

Diese konstruktive Ausgestaltung benötigt jedoch einen viel zu großen Platz, verursacht eine sperrige Bauweise und zudem zu hohen Kosten.

Aus der DE 20022605 U1 ist eine Extrudiervorrichtung mit einer Extruderschnecke und einem Schneckenantrieb bekannt. Der Schneckenantrieb umfasst ein Antriebsgehäuse sowie einen Antriebsmotor mit einem Stator und einem Rotor. Der Rotor ist ohne Zwischenschaltung eine Getriebes an eine Anschlussabschnitt der Extruderschnecke angeschlossen. Eine Zwei- oder Mehrschneckenkonstruktion ist damit jedoch nicht beschrieben.

Aufgabe der vorliegenden Erfindung ist es, eine einfache und platzsparende Konstruktion für einen gleichsinnig drehenden Mehrschneckenextruder anzugeben.

Diese Aufgabe wird durch die im Anspruch 1 angegebenen Merkmale gelöst.

Demgemäß wird bei einer Antriebsvorrichtung für einen gleichsinnig drehenden Mehrschneckenextruder gemäß der eingangs genannten Art ein Rotor mit einer Verzahnung vorgesehen, die mit komplimentären Verzahnungen an zumindest zwei der Antriebswellen der Extruderschnecken im direkten Eingriff steht. Wird die Antriebsvorrichtung am Extrudergehäuse angeordnet, dann kämmt also die am Rotor angeordnete Verzahnung direkt mit den an den Antriebswellen vorgesehenen Verzahnungen. Durch diese konstruktive Ausgestaltung wird ein integriertes Verteilergetriebe geschaffen, welches bereits signifikant zu einer Platzeinsparung sowie einer Vereinfachung der Gesamtkonstruktion beiträgt.

Gemäß einer besonders bevorzugten Ausführungsform wird als Antriebsmotor ein Hohlwellenmotor vorgesehen, in dessen Hohlraum radial innerhalb des Rotors die Antriebswellen platzsparend aufgenommen werden können. Dies erlaubt nochmals eine kompaktere Bauweise der Antriebsvorrichtung sowie die Verwendung eines Motors mit hohem Drehmoment, der die erforderliche Extrudierleistung in guter Weise erbringen kann.

Insbesondere bei einer Verwendung eines Hohlwellenmotors mit einem innenliegenden Rotor, kann dieser mit einer Innenverzahnung versehen werden sein, die mit der komplimentären Verzahnung auf den Antriebswellen der Extruderschnecken bei montierter Antriebsvorrichtung in Eingriff steht. Die Verzahnung auf den Antriebswellen der Extruderschnecken können in Form von Zahnkränzen mit Außenverzahnung ausgebildet sein.

Um sicherzustellen, dass sich die Zahnkränze von verschiedenen Antriebswellen, auch bei dicht kämmenden Extruderschnecken nicht behindern, können diese axial gegeneinander versetzt angeordnet sein.

Gemäß einer bevorzugten Ausführungsform ist die Innenverzahnung selbst nicht unmittelbar am Rotor selbst ausgebildet, sondern an einer Büchse, die wiederum fest mit dem Rotor verbunden ist.

Gemäß einer weiteren bevorzugten Ausführungsform ist die Antriebsvorrichtung über einen Verbindungsflansch oder eine Verbindungseinrichtung an ein Extrudergehäuse anbringbar. In dem als Flansch ausgebildeten Verbindungselement kann in bevorzugter Weise eine radiale Lagerung der Antriebswellen der Extruderschnecken erfolgen. Eine radiale, sowie eine axiale Lagerung der Extruderschnecken kann darüber hinaus auf der dem Extrudergehäuse gegenüberliegenden Seite der Antriebsvorrichtung mittels eines Enddeckels erfolgen. Dieser Enddeckel kann ein- oder mehrteilig aufgebaut sein.

Über den Enddeckel - also Kopfseitig der gesamten aufzubauenden Extruderanordnung - kann ferner eine Kühlung und Schmierung des Verteilergetriebes erfolgen. Dazu kann an den Enddeckel ein externes Kühlaggregat angeschlossen werden. Der Enddeckel selbst ist dabei mit entsprechenden Kanälen ausgestattet, die einen Kühlmittelfluss in das Verteilergetriebe hinein sowie aus dem Verteilergetriebe heraus ermöglichen.

Vorzugsweise wird die vorliegende Erfindung bei einem gleichsinnig drehenden Doppelwellenextruder eingesetzt, wobei als Antriebsmotor ein regelbarer, elektrischer Antrieb verwendet wird.

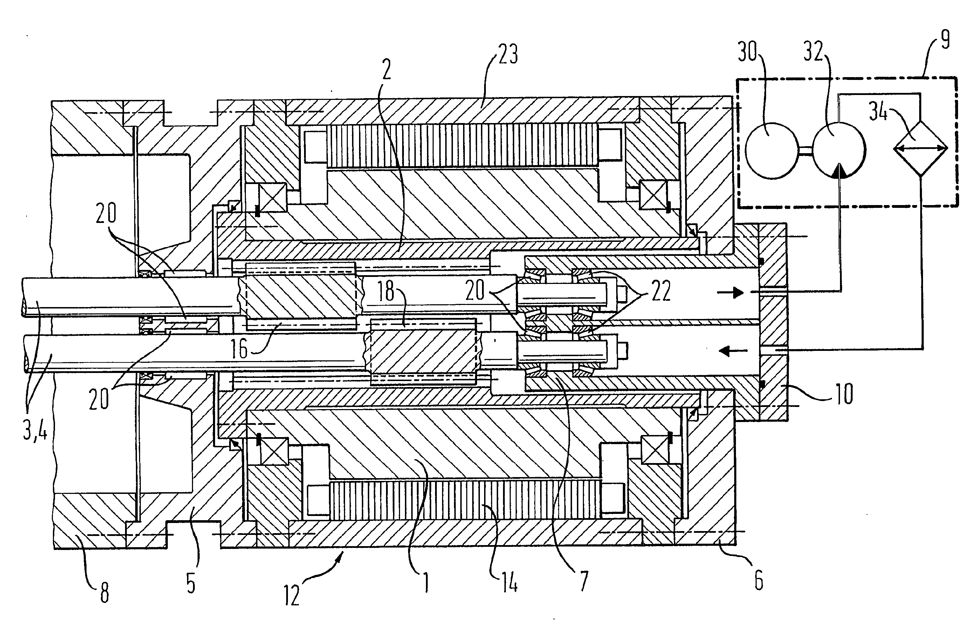

Nachfolgend wird die vorliegende Erfindung anhand der einzigen beigefügten Zeichnung näher erläutert. Die Zeichnung zeigt einen schematische Aufbau einer erfindungsgemäßen Antriebsvorrichtung, die an ein Extrudergehäuse angeflanscht ist.

Das vorliegende Ausführungsbeispiel ist auf einen gleichsinnig drehenden Doppelwellenextruder gerichtet. Jedoch ist dies nicht einschränkend zu verstehen. Die Erfindung kann in gleicher Weise mit gleichsinnig drehenden Mehrschneckenextrudern verwirklicht werden.

Vorliegend umfasst die erfindungsgemäße Antriebsvorrichtung ein Gehäuse 12, in dem ein Hohlwellenmotor mit einem Stator 14 und einem Rotor 1 gehalten bzw. gelagert ist. Das Gehäuse 12 ist vorliegend mehrteilig aufgebaut und umfasst einen etwa ringförmigen Kühlmantel 23, sowie zwei nicht näher bezeichnete, ringscheibenartige Stirnwände.

Radial innerhalb des Kühlmantels 23 ist ein ringförmiger Stator 14 drehfest angeordnet. Radial innerhalb dieses Stators 14 ist wiederum ein ringförmiger Rotor 1 vorgesehen, der in den beiden Stirnwänden des Gehäuses axial gelagert ist. Der Rotor 1 ist wiederum radial innerhalb mit einer Büchse 2 verbunden, welche eine Innenverzahnung aufweisen.

Das Gehäuse 12 der Antriebsvorrichtung ist über einen Verbindungsflansch 5 an einem nur teilweise dargestellten Extrudergehäuse 8 befestigt. In dem Extrudergehäuse 8 sind zwei Extruderschnecken (nicht näher dargestellt) aufgenommen, die an deren hinteren Enden Antriebswellen 3, 4 aufweisen. Die Antriebsweiien 3, 4 stehen über das Ende des Extrudergehäuses 8 über und erstrecken sich bei montierter Antriebsvorrichtung in den zylinderförmigen Hohlraum innerhalb der Büchse 2 hinein.

Jede Antriebswelle 3, 4 weißt - axial gegeneinander versetzt-jeweils einen Zahnkranz 16 bzw. 18 mit einer Außenverzahnung auf. Die Außenverzahnungen der beiden Zahnkränze 16 und 18 kämmen mit der Innenverzahnung der mit dem Rotor 1 fest verbundenen Büchse 2.

Am - in der Figur - hinteren Ende der Antriebsvorrichtung ist vorliegend eine dreiteilige Deckeleinheit mit einem Enddeckel 6, einen Einsatz 7 und einem Deckelkopf 10 angeordnet. Der Enddeckel 6 sitzt auf der Stirnwand des Gehäuses 12 und hält die beiden anderen Deckelteile, nämlich den Einsatz 7 und den Deckelkopf 10. Sowohl Einsatz 7 als auch Deckelkopf 10 erstrecken sich in den Bereich des zylindrischen Hohlraums innerhalb der Büchse 2 hinein, haben mit dieser jedoch keinen Kontakt.

In dem kombinierten Element aus Einsatz 7 und Deckelkopf 10 sind Radial- und Axiallager 20, sowie Radiallager 22 angeordnet, welche die hinteren, dünner ausgebildeten Enden der Antriebswellen der Extruderschnecken aufnehmen. Durch die Lager 20 und 22 erfolgt eine axiale und radiale Abstützung der hinteren Antriebswellen.

Insgesamt die sind die Antriebswellen 3 und 4 somit in besonders günstiger Weise beidseitig des Antriebsmotors zum einen in dem Verbindungsflansch 5 zum anderen in dem Enddeckel 6 abgestützt.

Der Enddeckel 6 weißt in seinem Deckelkopf 10 überdies Kanäle auf, über die ein Kühl- und Schmiermedium mittels eines externen Aggregats 9 zur Kühlung und Schmierung in das integrierte Verteilergetriebe eingeleitet werden kann. Dazu ist das externe Aggregat 9, welches einen Motor 30, eine Pumpe 32 und einen Kühler 34 aufweißt, über Leitungen mit dem Deckelkopf 10 verbunden. Das Kühlmedium wird über die im Deckelkopf 10 angeordneten Kühlkanäle dem Verteilergetriebe zur Verfügung gestellt und auch wieder abgeführt.

Beim Betrieb des vorzugsweise regelbaren Antriebsmotors setzt der Rotor 1 über die mit ihm festverbundene Büchse 2 und deren innenverzahnung unmittelbar die Antriebswellen 3 und 4 der Extruderschnecken in Bewegung. Insgesamt ist damit ein integriertes Verteilergetriebe mit einer integrierten Lagerung zu beiden Seiten des Motors geschaffen. In Kombination mit dem beim vorliegenden Ausführungsbeispiel verwendeten Hohlwellenmotor kann eine sehr kompakte und antriebsstarke Bauweise verwirklicht werden. Die Bautiefe der Antriebsvorrichtung entspricht etwas mehr als der Tiefe der Stator-, Rotoranordnung. Der Durchmesser der Antriebsvorrichtung entspricht etwas mehr als dem Durchmesser des Hohlwellenmotors.

Überdies ist eine besonders einfache Montage bzw. Demontage der Antriebsvorrichtung möglich. Es muss lediglich die nicht näher dargestellte und beschriebene Befestigung der Antriebsvorrichtung gegenüber dem Extrudergehäuse gelöst werden. Sodann kann die Antriebsvorrichtung einfach abgezogen bzw. im umgekehrten Fall also bei der Montage aufgesteckt werden.

Ein separates Verteilergetriebe sowie ein separates Untersetzungsgetriebe ist jedenfalls nicht mehr notwendig.

### Bezugszeichenliste

- 1: Rotor
- 2: Innenverzahnte Büchse
- 3: Erste Antriebswelle
- 4: Zweite Antriebswelle
- 5: Verbindungsflansch
- 6: Enddeckel
- 7: Einsatz
- 8: Extrudergehäuse
- 9: Externes Kühlaggregat
- 10: Deckelkopf
- 12: Gehäuse
- 14: Stator
- 16: Zahnkranz auf erster Antriebswelle
- 18: Zahnkranz auf zweiter Antriebswelle
- 20: Radial- und Axiallager
- 22: Radiallager
- 23: Kühlmantel
- 30: Motor
- 32: Pumpe
- 34: Kühler

## Patentansprüche

1. Antriebsvorrichtung für einen gleichsinnig drehenden Mehrschneckenextruder, mit einem in einem Gehäuse (12) aufgenommenen Antriebsmotor, der einen Stator (14) und einen Rotor (1) aufweist, wobei der Rotor (1) mit den Antriebswellen (3, 4) der Extruderschnecken wirkverbunden ist, **dadurch gekennzeichnet, dass** an dem Rotor (1) eine Verzahnung angeordnet ist, die mit komplementären Verzahnungen (16, 18) an zumindest zwei der Antriebswellen (3, 4) der Extruderschnecken im direkten Eingriff steht.

2. Antriebsvorrichtung nach Anspruch 1, **dadurch gekennzeichnet, dass** als Antriebsmotor ein Hohlwellenmotor mit einem im wesentlichen ringförmigen Stator (14) und einem radial innerhalb angeordneten, im wesentlichen ringförmigen Rotor (1) verwendet ist, wobei der Rotor (1) wiederum radial innerhalb hohl ausgebildet ist und in diesem Hohlraum die Antriebswellen (3,4) der Extruderschnecken aufgenommen sind.

3. Antriebsvorrichtung nach Anspruch 1 oder 2, **dadurch gekennzeichnet, dass** die Verzahnung am Rotor (1) eine Innenverzahnung und die komplementäre Verzahnung (16, 18) an den Antriebswellen der Extruderschnecken Zahnkränze mit einer Außenverzahnung sind.

4. Antriebsvorrichtung nach Anspruch 3, **dadurch gekennzeichnet, dass** die Innenverzahnung in einer Büchse (2) ausgebildet ist, wobei die Büchse mit dem Rotor (1) des Antriebsmotors fest verbunden ist.

5. Antriebsvorrichtung nach einem der Ansprüche 1 bis 4, **dadurch gekennzeichnet, dass** ein Verbindungselement (5) vorgesehen ist, mit dem das Gehäuse (12) an einem Extrudergehäuse (8) befestigbar ist.

6. Antriebsvorrichtung nach Anspruch 5, **dadurch gekennzeichnet, dass** das Verbindungselement (5) integrierter Teil des Gehäuses (12) ist.

7. Antriebsvorrichtung nach Anspruch 5 oder 6, **dadurch gekennzeichnet, dass** in dem Verbindungselement (5) eine Lagerung (20), insbesondere eine radiale Lagerung, für die Antriebswellen (3, 4) der Extruderschnecken vorgesehen sind.

8. Antriebsvorrichtung nach einem der vorhergehenden Ansprüche, **dadurch gekennzeichnet, dass** an der dem Extrudergehäuse (8) gegenüberliegenden Seite des Gehäuses (12) ein Enddeckel (10) vorgesehen ist.

9. Antriebsvorrichtung nach Anspruch 8, **dadurch gekennzeichnet, dass** in dem Enddeckel (10) axiale und/oder radiale Lagerungen (20, 22) der Antriebswellen (3, 4) der Schnecken vorgesehen sind.

10. Antriebsvorrichtung nach einem der Ansprüche 8 oder 9, **dadurch gekennzeichnet, dass** in dem Enddeckel Kühlkanäle ausgebildet sind, an die ein externes Aggregat (9) anschließbar ist.

11. Antriebsvorrichtung nach einem der vorhergehenden Ansprüche, **dadurch gekennzeichnet, dass** die Antriebsvorrichtung für einen gleichsinnig drehenden Doppelwellenextruder ausgebildet ist.

12. Antriebsvorrichtung nach einem der vorhergehenden Ansprüche, **dadurch gekennzeichnet, dass** der Antriebsmotor elektrisch regelbar ist.

## Claims

1. A drive device for a multi-screw extruder rotating in the same direction, comprising a drive motor accommodated in a housing (12), having a stator (14) and a rotor (1), wherein the rotor (1) is operatively connected to the drive shafts (3, 4) of the extruder screws, **characterised in that** a toothed structure is provided on the rotor (1), which is in direct engagement with complementary toothed structures (16, 18) on at least two of the drive shafts (3, 4) of the extruder screws.

2. The drive device according to claim 1, **characterised in that** a hollow-shaft motor with a substantially annular stator (14) and a substantially annular rotor (1) located radially on the inside, is used as the drive motor, wherein the rotor (1) is in turn configured as radially hollow on the inside and the drive shafts (3, 4) of the extruder screws are accommodated in this cavity.

3. The drive device according to claim 1 or 2, **characterised in that** the toothed structure on the rotor (1) is an internal toothed structure and the complementary toothed structure (16, 18) on the drive shafts of the extruder screws are sprocket wheels with an external toothed structure.

4. The drive device according to claim 3, **characterised in that** the internal toothed structure is formed in a sleeve (2), wherein the sleeve is firmly connected to the rotor (1) of the drive motor.

5. The drive device according to any one of claims 1 to 4, **characterised in that** there is provided a connecting element (5) with which the housing (12) can be affixed to the extruder housing (8).

6. The drive device according to claim 5, **characterised in that** the connecting element (5) is an integrated part of the housing (12).

7. The drive device according to claim 5 or 6, **characterised in that** a bearing (20), in particular a radial bearing, for the drive shafts (3, 4) of the extruder screws is provided in the connecting element (5).

8. The drive device according to any one of the preceding claims, **characterised in that** an end cap (10) is provided on the side of the housing (12) opposite to the extruder housing (8).

9. The drive device according to claim 8, **characterised in that** axial and/or radial bearings (20, 22) of the drive shafts (3, 4) of the screws are provided in the end cap (10).

10. The drive device according to any one of claims 8 or 9, **characterised in that** cooling channels are formed in the end cap, to which an external unit (9) can be connected.

11. The drive device according to any one of the preceding claims, **characterised in that** the drive device is configured for a double-shaft extruder rotating in the same direction.

12. The drive device according to any one of the preceding claims, **characterised in that** the drive motor can be controlled electrically.

## Revendications

1. Dispositif d'entraînement pour extrudeuse à vis multiples tournant dans le même sens, comportant un moteur d'entraînement installé dans un carter (12) et équipé d'un stator (14) et d'un rotor (14), le rotor (1) étant en liaison fonctionnelle avec les arbres moteurs (3, 4) des vis d'extrudeuse, **caractérisé en ce que**, sur le rotor (1), est disposée une denture qui s'engrène directement dans des dentures complémentaires (16, 18) au niveau d'au moins deux des arbres moteurs (3, 4) des vis d'extrudeuse.

2. Dispositif d'entraînement selon la revendication 1, **caractérisé en ce qu'**on emploie comme moteur d'entraînement un moteur à arbre creux équipé d'un stator sensiblement de forme annulaire (14) et d'un rotor sensiblement de forme annulaire disposé radialement à l'intérieur, le rotor (1) étant de son côté réalisé creux radialement vers l'intérieur et les arbres moteurs (3, 4) des vis d'extrudeuse étant installés dans cette cavité.

3. Dispositif d'entraînement selon la revendication 1 ou 2, **caractérisé en ce que** la denture du rotor (1) est une denture interne et la denture complémentaire (16, 18) des arbres moteurs des vis d'extrudeuse sont des couronnes dentées à denture externe.

4. Dispositif d'entraînement selon la revendication 3, **caractérisé en ce que** la denture interne est réalisée dans une douille (2), la douille étant raccordée fixement au rotor (1) du moteur d'entraînement.

5. Dispositif d'entraînement selon une des revendications 1 à 4, **caractérisé en ce qu'**il est prévu un élément de raccordement par lequel le carter (12) peut être fixé sur une enceinte d'extrudeuse (8).

6. Dispositif d'entraînement selon la revendication 5, **caractérisé en ce que** l'élément de raccordement (5) fait partie intégrante du carter (12).

7. Dispositif d'entraînement selon la revendication 5 ou 6, **caractérisé en ce que**, dans l'élément de raccordement (5), il est prévu un palier (20), notamment un palier radial, pour les arbres moteurs (3, 4) des vis d'extrudeuse.

8. Dispositif d'entraînement selon une des revendications précédentes, **caractérisé en ce qu'**il est prévu, sur le côté du carter (12) opposé à l'enceinte de l'extrudeuse (8), un couvercle terminal (10).

9. Dispositif d'entraînement selon la revendication 8, **caractérisé en ce qu'**il est prévu, dans le couvercle terminal (10), des paliers axiaux et/ou radiaux (20, 22) des arbres moteurs (3, 4) des vis.

10. Dispositif d'entraînement selon une des revendications 8 ou 9, **caractérisé en ce que**, dans le couvercle terminal, sont constitués des canaux de refroidissement auxquels un agrégat externe (9) peut être raccordé.

11. Dispositif d'entraînement selon une des revendications précédentes, **caractérisé en ce que** le dispositif d'entraînement est réalisé pour une extrudeuse à arbre double tournant dans le même sens.

12. Dispositif d'entraînement selon une des revendications précédentes, **caractérisé en ce que** le moteur d'entraînement est réglable électriquement.
